# EUROPÄISCHE PATENTSCHRIFT

(11) **EP 3 322 300 B1**
(45) Veröffentlichungstag und Bekanntmachung des Hinweises auf die Patenterteilung: **26.12.2018**
(21) Anmeldenummer: 16720110.2
(22) Anmeldetag: 02.05.2016
(51) Int. Cl.: A22C 25/16

(54) **VORRICHTUNG UND VERFAHREN ZUM ENTFERNEN VON FLEISCHGRÄTEN AUS EINEM FISCHFILET**
DEVICE AND METHOD FOR THE REMOVAL OF PINBONES FROM A FISH FILET
MACHINE ET PROCÉDÉ D'EXTRACTION D'ARÊTES D'UN FILET DE POISSON

(30) Priorität: 15.07.2015 DE 102015111448
(43) Veröffentlichungstag der Anmeldung: 23.05.2018
(73) Patentinhaber: Nordischer Maschinenbau Rud. Baader GmbH + Co. KG, 23560 Lübeck (DE)
(72) Erfinder: GOTTSCHALK, Roman, 23552 Lübeck (DE); RUSKO, Torsten, 23923 Herrnburg (DE)
(74) Vertreter: Stork Bamberger Patentanwälte PartmbB
(86) Internationale Anmeldenummer: PCT/EP2016/059777
(87) Internationale Veröffentlichungsnummer: WO 2017/008931

(56) Entgegenhaltungen:
- WO-A1-93/13672
- GB-A- 1 200 084
- US-B2- 7 247 086

## Beschreibung

Die Erfindung betrifft eine Vorrichtung, ausgebildet und eingerichtet zum Entfernen von Fleischgräten aus einem vollständig vom Grätengerüst abgetrennten Fischfilet, umfassend ein Werkzeug mit einem Klemmmechanismus zum Klemmen und Freigeben einzelner Fleischgräten, einen Antrieb zum rotierenden Antreiben mindestens von Teilen des Klemmmechanismus, sowie Mittel zum Übertragen der Rotationsbewegung vom Antrieb auf den Klemmmechanismus.

Die Erfindung betrifft auch ein Verfahren zum Entfernen von Fleischgräten aus einem vollständig vom Grätengerüst abgetrennten Fischfilet, umfassend die Schritte: Klemmen der Fleischgräten mittels eines einen Klemmmechanismus aufweisenden Werkzeugs, Lösen der Fleischgräten mittels des Klemmmechanismus, indem mindestens Teile des Klemmmechanismus unter der Einwirkung eines Antriebs stehen, und vollständiges Entfernen der Fleischgräten durch Ziehen der Fleischgräten in ihre Wuchsrichtung mittels des Klemmmechanismus.

Solche Vorrichtungen und Verfahren kommen in der Fisch verarbeitenden Industrie zum Einsatz, um bei der Filetierung von Fischen insbesondere der Spezies "Salmoniden" die sich von der Wirbelsäule oder der oberen Strahlengräte beidseitig in die Filets erstreckenden Fleischgräten, die so genannten Pinbones, aus dem Filet zu entfernen. Beim Filetieren der geschlachteten und vorzugsweise in ihrer Bauchhöhle geöffneten Fische werden die Fischfilets zunächst vollständig vom Grätengerüst getrennt. Dabei werden die Fleischgräten im Bereich der Wirbelsäule bzw. oberen Strahlengräte von dieser abgetrennt, so dass diese Fleischgräten in dem abgetrennten Fischfilet verbleiben. Diese beim Filetieren gewonnenen Fischfilets werden dann üblicherweise mit der Haut nach unten liegend manuell oder maschinell weiter verarbeitet, so dass die Fleischgräten mit ihren abgetrennten Enden je nach Frische des Fisches entweder nach oben etwas aus dem Fleisch herausragen oder sich im Bereich der Oberfläche des Fischfilets auf der der Haut abgewandten Seite befinden.

Diese freien Enden der abgetrennten Fleischgräten werden im Folgenden als Fleischgrätenwurzel bezeichnet. Die Fleischgräten ragen ausgehend von ihrer Fleischgrätenwurzel in das Filet in Richtung der Haut hinein. Dabei sind die Fleischgräten in das Filetfleisch eingebettet und mit diesem z.B. über Gewebe, Knorpel oder dergleichen verwachsen.

Zum Entfernen der Fleischgräten aus den Fischfilets sind diese Verwachsungen/Verbindungen zu lösen, so dass die Fleischgräten nach dem Lösen in ihrer Wuchsrichtung herausgezogen werden können. Je frischer das Filet ist, desto fester sind die Fleischgräten mit der Fleischstruktur verwachsen. In der Praxis sind unterschiedliche Systeme im Einsatz, um die Fleischgräten, also die Pinbones, aus dem Filet zu ziehen. Die US 7,247,086 B2 beschreibt eine Vorrichtung und ein Verfahren zum Entfernen von Fleischgräten mit den Merkmalen des Oberbegriffes des Anspruches 1 bzw. des Anspruches 12. Der Klemmmechanismus zum Klemmen und Freigeben der Fleischgräten wird durch eine Walze und eine Gegenlage gebildet. Durch das Rotieren der eine strukturierte Oberfläche aufweisenden Walze mittels eines Drehmomentgenerators als Antrieb werden die Fleischgräten zwischen der nur in einer Richtung rotierend angetriebenen Walze und der Gegenlage eingeklemmt. Sobald die Klemmung der Fleischgräten zwischen der Walze und der Gegenlage erfolgt ist, wird die Walze stillgesetzt. Zum Lösen der nunmehr eingeklemmten Fleischgräten wird der Klemmmechanismus mittels eines Vibrationsgenerators in Vibrationen versetzt. Wenn die eingeklemmten Fleischgräten gelöst sind, wird das Rotieren der Walze in dieselbe Richtung wieder aufgenommen, um die Fleischgräten so aus dem Filet zu ziehen.

Die bekannten Systeme weisen den Nachteil auf, dass sie zum einen konstruktiv aufwendig und zum anderen bezüglich des Entgrätungserfolgs begrenzt sind. Mit anderen Worten führen die bekannten Systeme einerseits beim Klemmen teilweise zum Bruch von Fleischgräten, so dass Grätenreste im Filet verbleiben. Andererseits können die Fleischgräten nicht zuverlässig gelöst und damit entfernt werden.

Der Erfindung liegt somit die Aufgabe zugrunde, eine einfache und kompakte Vorrichtung zu schaffen, die die Fleischgräten zuverlässig aus dem Filet löst.

Diese Aufgabe wird durch eine Vorrichtung nach Anspruch 1 mit den eingangs genannten Merkmalen dadurch gelöst, dass der Klemmmechanismus einen rotierend um eine Drehachse D antreibbaren Grundkörper umfasst, dem mindestens zwei eine resultierende Mittelachse M definierende Klemmbacken zum Klemmen und Freigeben der Fleischgräten zugeordnet sind, wobei die Klemmbacken aufeinander zu und voneinander weg bewegbar ausgebildet und eingerichtet sind, und dass der Antrieb zum Ausüben einer oszillierenden Drehbewegung des Grundkörpers um die Drehachse D und damit der Klemmbacken um die Mittelachse M ausgebildet und eingerichtet ist. Die erfindungsgemäße Konstruktion ermöglicht zum einen ein schonendes bzw. belastungsreduziertes Klemmen der Fleischgräten. Zum anderen ermöglicht die oszillierende Drehbewegung des gesamten Klemmmechanismus, also des Grundkörpers und der Klemmbacken um die Drehachse D bzw. Mittelachse M, ein sicheres und dennoch schonendes bzw. belastungsreduziertes Lösen der Fleischgräten insbesondere auch aus frischen Fischfilets. Durch die oszillierende Drehbewegung, also das hin und her Drehen des Werkzeugs um die Drehachse D bzw. Mittelachse M in einem Winkel vorzugsweise von kleiner +/-360° um eine Nulllage herum, werden die Fleischgräten zuverlässig von der Fleischstruktur und den bestehenden Verbindungen zum Filet gelöst, so dass sie aus dem Filet gezogen werden können.

Vorzugsweise sind die Drehachse D des Grundkörpers und die resultierende Mittelachse M der Klemmbacken gleichgerichtet und fluchtend zueinander ausgerichtet. Damit sind die Klemmbacken bzw. deren gemeinsame Mittelachse M sowie die Drehachse D des Grundkörpers zu den Fleischgräten zumindest im Bereich der den Klemmbacken zugewandten Enden, also im Bereich der Fleischgrätenwurzel, im Wesentlichen fluchtend zu der Mittelachse der zu entfernenden Fleischgräten ausgerichtet. Im Wesentlichen bedeutet in diesem Zusammenhang, dass das Werkzeug mit seinen geöffneten Klemmbacken quasi senkrecht auf die nach oben stehenden Fleischgräten aufsetzen kann. Das Werkzeug ermöglicht somit eine gezielte Klemmung der Fleischgräten, was den Entgrätungserfolg erhöht.

Eine bevorzugte Ausführungsform der Vorrichtung zeichnet sich dadurch aus, dass der Antrieb ein Elektromotor ist, mittels dem die oszillierende Drehbewegung um einen Winkel vorzugsweise größer +/-60° um eine Nulllage und besonders bevorzugt um einen Winkel +/-180° um die Nulllage ausführbar ist. Ausgehend von einer beliebig zu definierenden Nulllage, die beispielsweise durch die beim Aufsetzen des Klemmmechanismus bestimmte Position definiert wird, ist der Klemmmechanismus im bestimmungsgemäßen Funktionsbetrieb mit der eingeklemmten Fleischgräte abwechselnd um einen Winkel α in die eine Richtung und um einen Winkel β in die andere Richtung usw. bewegbar. Die Winkel α und β können dabei gleich groß oder unterschiedlich groß sein und vorzugsweise eine Größe von größer 1° und kleiner 360° betragen. Mit einer Winkelgröße von 180° jeweils ausgehend von der Nulllage in beide Richtungen wird ein besonders wirksamer Lösevorgang erreicht, um das Ziehen der Fleischgräten zu erleichtern.

Zweckmäßigerweise umfasst die Vorrichtung eine Steuereinheit, mittels der die Frequenz und die Amplitude der oszillierenden Drehbewegung um die Nulllage steuerbar sind. Dadurch kann die oszillierende Drehbewegung individuell für jedes Fischfilet, z.B. in Abhängigkeit der Größe der Fleischgräten, der Konsistenz der Fischfilets etc. eingestellt werden, und zwar bezüglich der Amplitude, also der Winkelgröße, und/oder der Frequenz, also der Häufigkeit der sich bezüglich der Drehrichtung abwechselnden Drehungen, und optional auch bezüglich der Stärke.

Eine vorteilhafte Weiterbildung ist dadurch gekennzeichnet, dass sie zum automatischen Entfernen der Fleischgräten aus Fischfilets ausgebildet und eingerichtet ist und ein Transportelement zum Zuführen und Abführen der zu bearbeitenden Fischfilets, Mittel zum Aufnehmen produktspezifischer Daten, eine Auswerteeinheit zum Ermitteln der exakten Position der zu entfernenden Fleischgräten in jedem Fischfilet sowie eine Steuereinheit zum Steuern des Werkzeugs in Abhängigkeit der aufgenommenen und ermittelten Daten und Informationen umfasst. Durch diese Ausführungsform ist eine besonders effiziente Vorrichtung geschaffen, die zudem den Entgrätungserfolg unabhängig von einer Bedienperson macht.

Vorteilhafterweise ist das Werkzeug bzw. der Grundkörper mit den daran angeordneten Klemmbacken zusätzlich zur oszillierenden Drehbewegung in mindestens zwei Freiheitsgraden bewegbar ausgebildet, nämlich einerseits vertikal zu der durch das Transportelement aufgespannten Transportebene E und andererseits quer zur Transportrichtung T des Transportelementes. Damit kann eine optimierte Positionierung des Klemmmechanismus in Bezug auf die Lage der Fleischgräten erreicht werden, so dass ein Klemmen und Ziehen der Fleischgräten in ihrer Wuchsrichtung zur Vermeidung eines Bruchs der Fleischgräten sichergestellt ist.

Eine bevorzugte Ausführungsform ist dadurch gekennzeichnet, dass das Werkzeug bzw. der Grundkörper mit den daran angeordneten Klemmbacken frei im Raum bewegbar ausgebildet und eingerichtet ist. Damit kann die Positionierung des Klemmmechanismus noch weiter verbessert werden, wodurch der Entgrätungserfolg weiter verbessert wird. Des Weiteren erlaubt diese Ausbildung auch das Mitlaufen des Werkzeugs mit dem zu bearbeitenden Fischfilet, wodurch zum einen die Relativgeschwindigkeit zwischen dem Werkzeug und dem Fischfielt reduziert oder ganz vermieden und zum anderen die Leistungsfähigkeit der Vorrichtung erhöht werden kann.

Zweckmäßigerweise ist das Werkzeug an einem Roboterarm angeordnet, mittels dem das Werkzeug bzw. der Grundkörper mit den daran angeordneten Klemmbacken mindestens in drei linearen Richtungen x, y, z bewegbar und um mindestens zwei Schwenkachsen S₁ und S₂ schwenkbar ausgebildet ist. Damit ist ein besonders flexibler Einsatz des Klemmmechanismus gewährleistet.

Eine vorteilhafte Weiterbildung zeichnet sich dadurch aus, dass das Mittel zum Aufnehmen der produktspezifischen Daten, nämlich zum Erkennen der Lage der Fischfilets auf dem Transportelement und/oder zum Erkennen der Größe und/oder Beschaffenheit der Fischfilets mindestens eine Kamera und/oder mindestens ein Röntgengerät umfasst. Durch diese Ausführungsform lässt sich das Werkzeug in detailgenauer Kenntnis der Fleischgrätenposition entsprechend exakt steuern, was zur Verbesserung des Entgrätungserfolgs beiträgt.

Vorteilhafterweise sind der Antrieb für das Transportelement, das Mittel zum Aufnehmen der produktspezifischen Daten, die Auswerteeinheit zum Ermitteln der exakten Position der zu entfernenden Fleischgräten sowie das Werkzeug zum Entfernen der Fleischgräten mit seinen Antrieben an eine gemeinsame Steuereinheit angeschlossen. In anderen Ausführungsformen können mehrere separate Steuereinheiten für die unterschiedlichen Komponenten vorhanden sein, die dann miteinander in Wirkverbindung stehen. Durch die gemeinsame Steuereinheit wird jedoch eine kompakte und leicht handhabbare Vorrichtung geschaffen.

In einer besonders bevorzugten Ausführungsform ist die Vorrichtung integraler Bestandteil einer automatischen Fischverarbeitungslinie. Dadurch lassen sich die Fleischgräten quasi online während des eigentlichen Filetierprozesses entfernen, wodurch eine leistungsgesteigerte und qualitätsverbesserte Fischverarbeitung gewährleistet wird.

Die Aufgabe wird auch durch ein Verfahren nach Anspruch 12, mit den eingangs genannten Schritten dadurch gelöst, dass der aus einem Grundkörper und mindestens zwei dem Grundkörper zugeordneten Klemmbacken gebildete Klemmmechanismus zum Lösen der Fleischgräten durch den Antrieb um eine Drehachse D zum Ausüben einer oszillierenden Drehbewegung rotierend angetrieben wird. Als oszillierende Drehbewegung wird eine Rotation bezeichnet, bei der das Werkzeug um seine Drehachse/Mittelachse abwechselnd in beide Drehrichtungen gedreht wird, derart, dass eine Pendelbewegung um eine Nulllage erreicht wird.

Vorteilhafterweise wird der Klemmmechanismus mit seinen mindestens zwei eine resultierende Mittelachse M definierenden Klemmbacken zum Klemmen der Fleischgräten derart auf diese aufgesetzt, dass die Mittelachse M, die gleichgerichtet und fluchtend zur Drehachse D ausgerichtet ist, zumindest im Bereich der den Klemmbacken zugewandten Enden der Fleischgräten im Wesentlichen fluchtend zu der Mittelachse der zu entfernenden Fleischgräten ausgerichtet wird.

Eine besonders bevorzugte Ausführungsform des Verfahrens ist dadurch gekennzeichnet, dass das Entfernen der Fleischgräten automatisch erfolgt, derart, dass die Fischfilets mittels eines Transportelementes zu- und abgeführt werden, vor dem Entfernen der Fleischgräten produktspezifische Daten mittels eines Mittels aufgenommen werden, diese Daten zum Ermitteln der exakten Position der zu entfernenden Fleischgräten mittels einer Auswerteeinheit ausgewertet werden und das Werkzeug in Abhängigkeit der aufgenommenen und ermittelten Daten und Informationen mittels einer Steuereinheit gesteuert wird.

Vorteilhafterweise wird das Werkzeug bzw. der Grundkörper mit den daran angeordneten Klemmbacken zusätzlich zur oszillierenden Drehbewegung durch die Steuereinheit auf der Basis der aufgenommenen und ermittelten Daten und Informationen in mindestens zwei Freiheitsgraden zum Klemmen der Fleischgräten, zum Ziehen der Fleischgräten und zum Freigeben der Fleischgräten automatisch bewegt.

Eine bevorzugte Weiterbildung sieht vor, dass die oszillierende Drehbewegung des Klemmmechanismus hinsichtlich der Frequenz und der Amplitude gesteuert wird. Die Amplitude entspricht dem Drehwinkel, mit dem der Grundkörper mit den daran angeordneten Klemmbacken um die Nulllage gedreht wird, z.B. ausgehend aus einer Nulllage +180° in die eine Richtung und unter Überschreitung der Nulllage -180° in die andere Richtung, also ein Pendeln um 180° um die Nulllage herum. Die Frequenz beschreibt die Häufigkeit pro Zeiteinheit dieser Pendelbewegung um die Nulllage herum.

Die sich daraus ergebenden Vorteile wurden bereits im Zusammenhang mit der Vorrichtung beschrieben, weshalb zur Vermeidung von Wiederholungen auf die entsprechenden Passagen verwiesen wird.

Weitere zweckmäßige und/oder vorteilhafte Merkmale und Weiterbildungen der erfindungsgemäßen Vorrichtung sowie bevorzugte Verfahrensschritte des erfindungsgemäßen Verfahrens ergeben sich aus den Unteransprüchen sowie der Beschreibung. Eine besonders bevorzugte Ausführungsform der Erfindung wird anhand der beigefügten Zeichnung näher erläutert. In der Zeichnung zeigt:
- Fig. 1: eine schematische Darstellung einer ersten Ausführungsform der erfindungsgemäßen Vorrichtung in Vorderansicht,

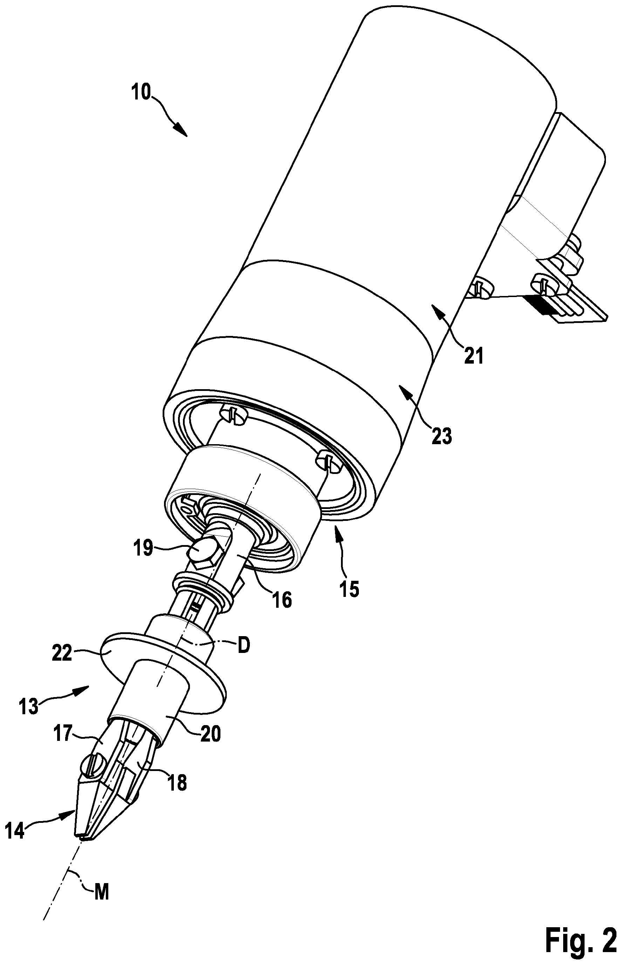

- Fig. 2: eine perspektivische Darstellung der Vorrichtung gemäß Figur 1,
- Fig. 3: eine schematische Darstellung einer weiteren Ausführungsform der erfindungsgemäßen Vorrichtung in Vorderansicht,
- Fig. 4: eine schematische Darstellung einer weiteren Ausführungsform der erfindungsgemäßen Vorrichtung in Vorderansicht, und
- Fig. 5: die Darstellung in der Ansicht V-V gemäß Figur 4.

Die in der Zeichnung dargestellte Vorrichtung dient zum Entfernen von Pinbones aus einem Lachsfilet. Selbstverständlich ist die erfindungsgemäße Vorrichtung auch zum Entfernen jeder anderen Art von Fleischgräten aus Filets unterschiedlicher Fischarten geeignet.

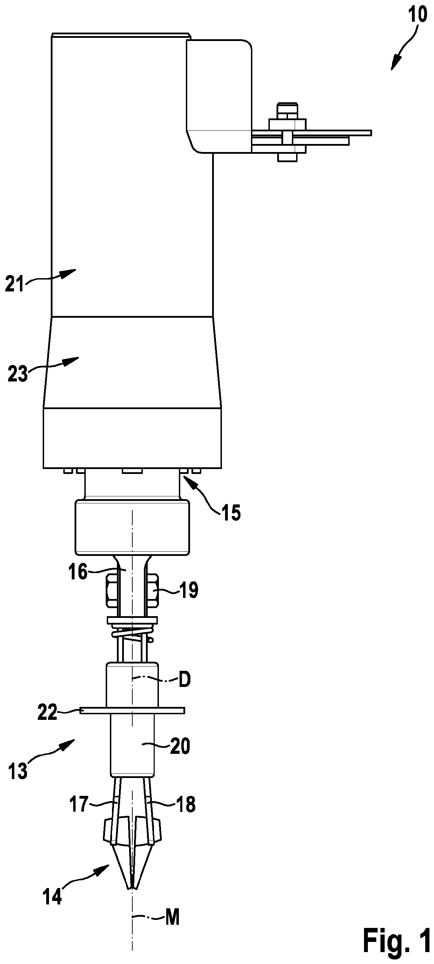

In der Figur 1 ist eine Vorrichtung 10 dargestellt, die zum Entfernen von Fleischgräten 11 aus einem vollständig vom Grätengerüst abgetrennten Fischfilet 12 ausgebildet und eingerichtet ist. Die Vorrichtung 10 umfasst ein Werkzeug 13 mit einem Klemmmechanismus 14 zum Klemmen und Freigeben einzelner Fleischgräten 11, einen Antrieb 15 zum rotierenden Antreiben mindestens von Teilen des Klemmmechanismus 14, sowie Mittel zum Übertragen der Rotationsbewegung vom Antrieb 15 auf den Klemmmechanismus 14.

Diese Vorrichtung 10 zeichnet sich erfindungsgemäß dadurch aus, dass der Klemmmechanismus 14 einen rotierend um eine Drehachse D antreibbaren Grundkörper 16 umfasst, dem mindestens zwei eine resultierende Mittelachse M definierende Klemmbacken 17, 18 zum Klemmen und Freigeben der Fleischgräten 11 zugeordnet sind, wobei die Klemmbacken 17, 18 aufeinander zu und voneinander weg bewegbar ausgebildet und eingerichtet sind, und dass der Antrieb 15 zum Ausüben einer oszillierenden Drehbewegung des Grundkörpers 16 um die Drehachse D und damit der Klemmbacken 17, 18 um die Mittelachse M ausgebildet und eingerichtet ist.

Die im Folgenden beschriebenen Merkmale und Weiterbildungen stellen für sich betrachtet oder in Kombination miteinander bevorzugte Ausführungsformen dar. Es wird ausdrücklich darauf hingewiesen, dass Merkmale, die in den Ansprüchen und/oder der Beschreibung zusammengefasst oder in einer gemeinsamen Ausführungsform beschrieben sind, auch funktional eigenständig die weiter oben beschriebene Vorrichtung 10 weiterbilden können. Entsprechendes gilt für das weiter unten beschriebene Verfahren.

Wie erwähnt, sind die Klemmbacken 17, 18 dem Grundkörper 16 zugeordnet. Damit ist die Drehbewegung des Grundkörpers 16 auf die Klemmbacken 17, 18 übertragbar. Anders ausgedrückt sind die Klemmbacken 17, 18 gegenüber dem Grundkörper 16 verdrehfest angeordnet. Die zwei oder mehr Klemmbacken 17, 18 bilden einen Einheit, deren gemeinsame, nämlich resultierende Mittelachse M zentral verläuft. Der Grundkörper 16 kann ein Abtriebselement des Antriebs 15, also ein Bestandteil des Antriebs 15, oder ein vom Antrieb 15 separates Element sein. Die dem Grundkörper 16 zugeordneten Klemmbacken 17, 18 können einstückig mit dem Grundkörper 16 ausgebildet oder zusammen oder einzeln lösbar am Grundkörper 16 befestigt sein.

Die Klemmbacken 17, 18 können als einfache, vorgespannte Federbleche ausgebildet sein. In den gezeigten Ausführungsformen sind zwei Klemmbacken 17, 18 vorgesehen, die eine Art Pinzettenanordnung bilden. Die beiden Klemmbacken 17, 18, die im gezeigten Beispiel mittels Schrauben 19 am Grundkörper 16 lösbar befestigt sind, sind mittels eines Hülsenelementes 20 in einer Schließ- bzw. Klemmstellung gehalten. Durch das lineare Bewegen des Hülsenelementes 20, beispielsweise mittels eines Pneumatikzylinders oder dergleichen, nach oben weg von den freien Enden der Klemmbacken 17, 18 können die Federbleche entspannen und sich aus der Klemmstellung voneinander weg in eine geöffnete Aufnahmestellung bewegen. Durch das Bewegen des Hülsenelementes 20 nach unten in Richtung der freien Enden wird durch das aufeinander zu Bewegen wieder die Klemmstellung erreicht. Andere Ausbildungen der Klemmbacken 17, 18 beispielsweise als pneumatisch betriebenes Spannfutter oder dergleichen sind aber ebenfalls möglich. Die Anzahl der Klemmbacken 17, 18 kann ebenfalls variieren.

Die erfindungsgemäße Vorrichtung 10 eignet sich u.a. auch als Handgerät, das von einer Bedienperson geführt wird. Dazu kann die Vorrichtung 10 einen Schaft 21 aufweisen, der als Griff dient und im Falle einer Einbindung der Vorrichtung 10 in eine automatische Filetiermaschine auch als Halterung dienen kann. Innerhalb des Schaftes 21 sind vorzugsweise der Antrieb 15 zum rotierenden Antreiben des Klemmmechanismus 14 und das Mittel zum Übertragen der Rotationsbewegung vom Antrieb 15 auf den Klemmmechanismus 14 angeordnet. Für den Fall, dass die Vorrichtung 10 als Handgerät eingesetzt wird, sind am Schaft 21 Betätigungsmittel für den Antrieb 15 vorgesehen. Das Handgerät kann batteriebetrieben eingesetzt werden. Das Hülsenelement 20 weist zum Betätigen des Klemmmechanismus 14 ein kragenförmiges Betätigungselement 22 oder dergleichen auf.

Die Drehachse D des Grundkörpers 16 und die resultierende Mittelachse M der Klemmbacken 17, 18 sind in der gezeigten Ausführungsform gleichgerichtet und fluchtend zueinander ausgerichtet. Diese Achsausrichtung bildet im bestimmungsgemäßen Gebrauch, wenn also eine Fleischgräte 11 durch den Klemmmechanismus 14 geklemmt ist, die Verlängerung der Mittelachse A einer Fleischgräte 11, so dass auf die Fleischgräte 11 eine rein rotatorische Bewegung in Form der oszillierenden Drehbewegung um deren Mittelachse A ausgeübt werden kann.

Als Antrieb 15 ist besonders bevorzugt eine Elektromotor vorgesehen, mittels dem die oszillierende Drehbewegung besonders präzise ausführbar ist. Mit dem Elektromotor lassen sich Frequenz und Amplitude der oszillierenden Drehbewegung schnell und einfach einstellen und verändern. Mit der Amplitude ist die Winkelgröße beschrieben, um den der Klemmmechanismus 14 um eine Nulllage herum hin und her gedreht wird. Vorzugsweise ist der Winkel +/-60° um die Nulllage und besonders bevorzugt um einen Winkel +/-180°. Das bedeutet, dass der Klemmmechanismus 14 ausgehend von der Nulllage zunächst um +180° in eine Richtung gedreht wird, um anschließend um 360° in die andere Richtung zu drehen, gleichbedeutend ausgehend von der Nulllage um -180° in die andere, entgegengesetzte Richtung. Die Größe der Amplitude und der Frequenz, mit der die hin und her Bewegung ausgeführt wird, ist mittels einer Steuereinheit 23 steuerbar.

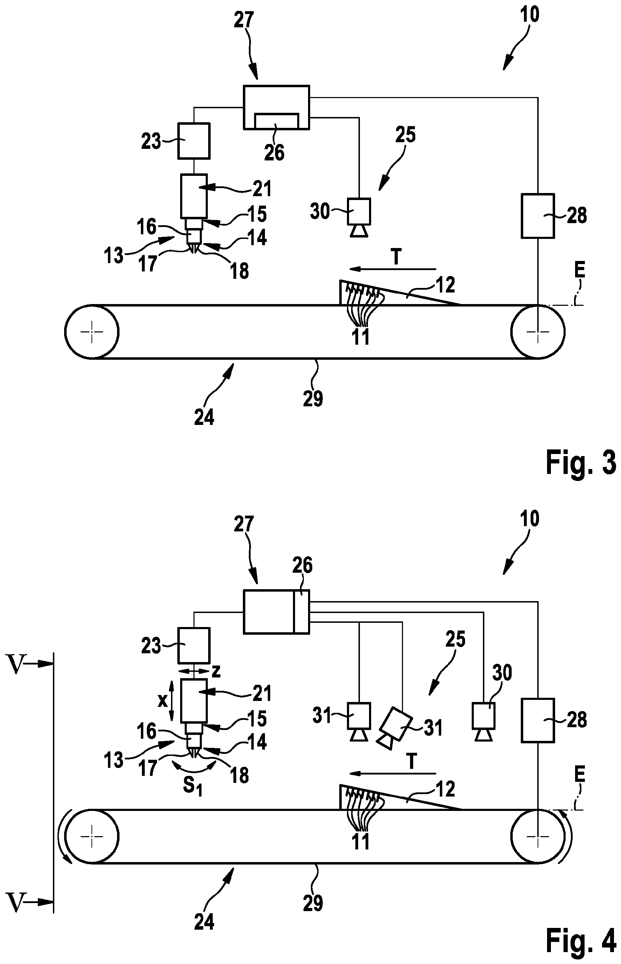

Besonders bevorzugt ist die Vorrichtung 10 zum automatischen Entfernen der Fleischgräten 11 aus Fischfilets 12 ausgebildet und eingerichtet, also Bestandteil einer automatisierten Filetiermaschine und insbesondere integraler Bestandteil einer automatischen Fischverarbeitungslinie. Dazu umfasst die Vorrichtung 10 ein Transportelement 24 zum Zuführen und Abführen der zu bearbeitenden Fischfilets, Mittel 25 zum Aufnehmen produktspezifischer Daten, eine Auswerteeinheit 26 zum Ermitteln der exakten Position der zu entfernenden Fleischgräten 11 in jedem Fischfilet 12 sowie eine Steuereinheit 27 zum Steuern des Werkzeugs 13 in Abhängigkeit der aufgenommenen Daten und Informationen. Beispiele einer solchen Anordnung sind insbesondere den Figuren 3 und 4 zu entnehmen.

Das Transportelement 24 ist beispielsweise ein mittels eines Antriebs 28 umlaufend angetriebenes Förderband 29. Andere Fördermittel sind aber ebenfalls einsetzbar. In Transportrichtung T vor dem Werkzeug 13 ist das Mittel 25 zum Aufnehmen produktspezifischer Daten angeordnet. Das Mittel 25 kann wie in Figur 3 z.B. eine Kamera 30 umfassen. In der Figur 4 umfasst das Mittel 25 neben einer Kamera 30 weiterhin zwei Röntgengeräte 31. Die Anzahl und Auswahl der Mittel 25 ist jedoch variabel. Mit dem Mittel 25 können zum einen die Lage der Fischfilets 12 auf dem Transportelement 24 und/oder zum anderen die Größe und/oder die Beschaffenheit der Fischfilets 12 erkannt werden. Mit anderen Worten ist das Mittel 25 dazu ausgebildet und eingerichtet, sämtliche Informationen zum Fischfilet 12, die im Zusammenhang mit dem Entfernen der Fischgräten 11 von Bedeutung sind, wie z.B. geometrische Daten zum Fischfilet 12, nämlich Größe, äußere Kontur, Oberflächenkontur sowie Lage der Fleischgräten 11 im Fischfilet 12 und Position der Fischfilets 12 auf dem Transportelement 24, oder Daten zur Beschaffenheit/Konsistenz der Fischfilets 12 zu sammeln und zu speichern. Die Auswerteeinheit 26 kann integraler Bestandteil des Mittels 25 oder der Steuereinheit 27 sein. An die Steuereinheit 27 sind der Antrieb 28 für das Transportelement 24, das Mittel 25 zum Aufnehmen der produktspezifischen Daten, die Auswerteeinheit 26 zum Ermitteln der exakten Position der zu entfernenden Fleischgräten 11 sowie das Werkzeug13 zum Entfernen der Fleischgräten 11 mit seinem dargestellten Antrieb 15 sowie allen anderen zur Bewegung des Werkzeugs 13 nicht explizit dargestellten Antrieben und der Steuereinheit 23 angeschlossen. Die Steuereinheit 23 kann aber auch integraler Bestandteil der übergeordneten Steuereinheit 27 sein. Die gesamte Vorrichtung 10 ist vorzugsweise an eine zentrale Stromversorgung angeschlossen.

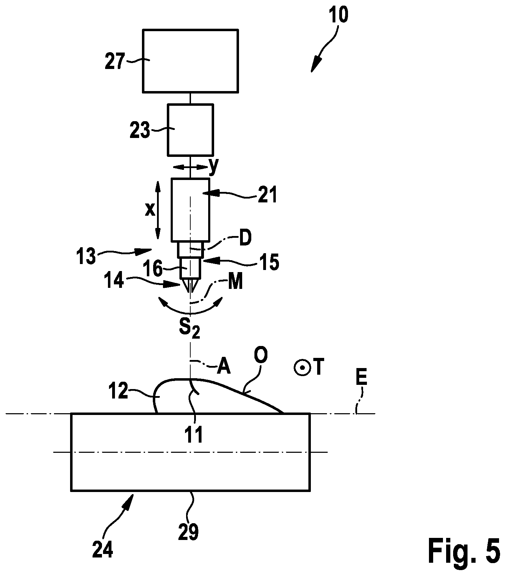

Das Werkzeug 13 bzw. der Grundkörper 16 mit den daran angeordneten Klemmbacken 17, 18 ist zusätzlich zur oszillierenden Drehbewegung in mindestens zwei Freiheitsgraden bewegbar ausgebildet. Um das Werkzeug 13 in Abhängigkeit der Position des Fischfilets 12 auf dem Transportelement 24 sowie der Position der zu entfernenden Fleischgräten 11 in dem Fischfilet 12 optimal positionieren zu können, ist das Werkzeug 13 einerseits vertikal (siehe x-Richtung in den Figuren 4 und 5) zu der durch das Transportelement 24 aufgespannten Transportebene E und andererseits quer zur Transportrichtung T (siehe y-Richtung in Figur 5) der Fischfilets 12 auf dem Transportelement 24 bewegbar. Optional kann das Werkzeug auch in einer weiteren Richtung, nämlich parallel zur Transportrichtung T (siehe z-Richtung in der Figur 4) bewegbar sein. Damit kann das Werkzeug 13 dann auch während der Bearbeitung mit dem Fischfilet 12 mitlaufend betätigbar sein. Besonders vorteilhaft ist eine Ausbildung des Werkzeugs 13, bei der das Werkzeug 13 bzw. der Grundkörper 16 mit den daran angeordneten Klemmbacken 17, 18 frei im Raum bewegbar ausgebildet und eingerichtet ist, wenn das Werkzeug 13 also an jede räumliche Position des Fischfilets 12 bewegbar ist.

Zur Bewegung des Werkzeugs 13 entlang der genannten (x-, y-, z-)Richtung können z.B. Linearantriebe vorgesehen sein. Besonders bevorzugt ist das Werkzeug 13 an einem (nicht explizit dargestellten) Roboterarm oder dergleichen angeordnet. Mittels des Roboterarms ist das am freien Ende desselben angeordnete Werkzeug 13 bzw. der Grundkörper 16 mit den daran angeordneten Klemmbacken 17, 18 mindestens in drei linearen Richtungen, nämlich in X-, y- und z-Richtung bewegbar und um mindestens zwei Schwenkachsen S1 und S2 schwenkbar ausgebildet. Die Schwenkachse S₁ (angedeutet in Figur 4) betrifft ein Schwenken in Transportrichtung T. Die Schwenkachse S₂ (angedeutet in Figur 5) betrifft ein Schwenken quer zur Transportrichtung T. Die Schwenkachsen S₁ und S₂ dienen insbesondere dazu, das Werkzeug 13 in eine optimale Klemmposition zu bringen, in der die Drehachse D des Grundkörpers 16 und entsprechend die Mittelachse M der Klemmbacken 17, 18 im Wesentlichen fluchtend zur Mittelachse A der Fleischgräte 11 ausgerichtet ist. Mit diesen Bewegungsmöglichkeiten können die Schwankungen der Lage und Ausrichtung der Fleischgräten 11, da die Fischfilets 12 als Naturprodukt unterschiedliche Wuchsrichtungen und Ausrichtungen der Fleischgräten 11 aufweisen, ausgeglichen werden.

Im Folgenden wird das Verfahren zum Entfernen von Fleischgräten 11 aus einem vollständig vom Grätengerüst abgetrennten Fischfilet 12 anhand der beigefügten Zeichnung näher erläutert:
Zunächst werden die Fleischgräten 11 mittels eines einen Klemmmechanismus 14 aufweisenden Werkzeugs 13 eingeklemmt. Wenn die Fleischgräte 11 sicher eingeklemmt ist, wird sie mittels des Klemmmechanismus 14 gelöst, indem mindestens Teile des Klemmmechanismus 14 unter der Einwirkung eines Antriebs 15 stehen. Wenn die Fleischgräte 11 ausreichend gelöst ist, wird sie vollständig aus dem Fischfilet 12 entfernt, indem die Fleischgräte 11 mittels des Klemmmechanismus 14 in ihrer Wuchsrichtung herausgezogen wird.

Erfindungsgemäß wird der aus einem Grundkörper 16 und mindestens zwei dem Grundkörper 16 zugeordneten Klemmbacken 17, 18 gebildete Klemmmechanismus 14 zum Lösen der Fleischgräten 11 durch den Antrieb 15 um eine Drehachse D zum Ausüben einer oszillierenden Drehbewegung rotierend angetrieben. Das bedeutet, dass jede geklemmte Fleischgräte 11 solange um eine Nulllage hin und her gedreht wird, bis sie ausreichend gelöst ist, um sie aus dem Fischfilet 12 zu ziehen.

Zum Klemmen der Fleischgräten 11 wird der Klemmmechanismus 14 mit seinen mindestens zwei eine resultierende Mittelachse M definierenden Klemmbacken 17, 18 derart von oben auf die Fleischgräten 11 aufgesetzt, dass die Mittelachse M der Klemmbacken 17, 18, die gleichgerichtet und fluchtend zur Drehachse D des Grundkörpers 16 ausgerichtet ist, zumindest im Bereich der den Klemmbacken 17, 18 zugewandten Enden der Fleischgräten 11 im Wesentlichen fluchtend zu der Mittelachse A der zu entfernenden Fleischgräten 11 ausgerichtet ist. In der Figur 5 ist ein solcher (idealisierter) Zustand dargestellt. Da die freien Enden der Fleischgräten 11, die sich im Bereich der dem Werkzeug 13 zugewandten Oberseite des Fischfilets 12 befinden oder aus diesem herausragen, aufgrund der Tatsache, dass es sich um ein Naturprodukt handelt, unterschiedliche Positionen/Lagen/Ausrichtungen einnehmen können, wird zum einen eine "im Wesentlichen" fluchtende Ausrichtung als ausreichend genannt, da eine ideale fluchtende Ausrichtung nicht immer eingehalten werden kann, und zum anderen wird die Position des Werkzeugs 13 zur Fleischgräte 11 nachjustiert, um die optimale Position zu erreichen.

In der automatischen Version des Verfahrens werden die Fischfilets 12 zunächst mittels des Transportelementes 24 in den Bereich des Werkzeugs 13 transportiert. Auf dem Transportweg zum Werkzeug 13 werden die einzelnen Fischfilets 12 durch ein Mittel 25 detektiert und/oder aufgenommen und/oder gescannt, um produktspezifische Daten aufzunehmen. Diese Daten werden durch eine Auswerteeinheit 26 ausgewertet und einer Steuereinheit 27 zur Verfügung gestellt. Zum Bewegen des Werkzeugs 13 an die gewünschte Position wird das Werkzeug 13 bzw. der Grundkörper 16 mit den daran angeordneten Klemmbacken 17, 18 zusätzlich zur oszillierenden Drehbewegung durch die Steuereinheit 27 auf der Basis der aufgenommenen Daten und Informationen in mindestens zwei Freiheitsgraden zum Klemmen der Fleischgräten 11, zum Ziehen der Fleischgräten 11 und zum Freigeben der Fleischgräten 11 automatisch bewegt. Vorzugsweise wird das Werkzeug 13 entlang der x-, y- und z-Richtung sowie um die Schwenkachsen S₁ und S₂ automatisch bewegt.

Die Steuereinheit 27 steuert das Werkzeug 13 (in y- und z-Richtung sowie um die Schwenkachsen S₁ und S₂) an die korrekte Position oberhalb der zu entfernenden Fleischgräten 11, senkt das Werkzeug 13 (in x-Richtung) ab, so dass das Werkzeug 13 die Fleischgräten 11 greifen bzw. klemmen kann, löst die oszillierende Drehbewegung des Klemmmechanismus 14 aus, bis die Fleischgräte 11 gelöst ist, und hebt das Werkzeug 13 (in x-Richtung) wieder an, um die Fleischgräte 11 in Wuchsrichtung aus dem Fischfilet 12 zu ziehen. Die immer noch geklemmte Fleischgräte 11 kann dann an geeigneter Stelle abgeworfen werden, um den Klemmmechanismus 14 für den nächsten Vorgang wieder frei zu machen. Die Frequenz und die Amplitude der oszillierenden Drehbewegung des Klemmmechanismus 14 werden durch die Steuereinheit 23 und/oder die Steuereinheit 27 gesteuert.

Beim Klemmen der Fleischgräten 11 ist der Antrieb 15 im "off-Betrieb", steht also still. Nach dem Greifen wird der Antrieb in den "on-Betrieb" geschaltet, so dass der Klemmmechanismus 14 eine oszillierende Drehbewegung ausführt. Wenn die Fleischgräte 11 gelöst ist, wird diese durch den Klemmmechanismus 14 herausgezogen, wobei dieser dabei stillstehen oder oszillierend drehen kann.

## Patentansprüche

1. Vorrichtung (10), ausgebildet und eingerichtet zum Entfernen von Fleischgräten (11) aus einem vollständig vom Grätengerüst abgetrennten Fischfilet (12), umfassend ein Werkzeug (13) mit einem Klemmmechanismus (14) zum Klemmen und Freigeben einzelner Fleischgräten (11), einen Antrieb (15) zum rotierenden Antreiben mindestens von Teilen des Klemmmechanismus (14), sowie Mittel zum Übertragen der Rotationsbewegung vom Antrieb (15) auf den Klemmmechanismus (14),
**dadurch gekennzeichnet, dass** der Klemmmechanismus (14) einen rotierend um eine Drehachse D antreibbaren Grundkörper (16) umfasst, dem mindestens zwei eine resultierende Mittelachse M definierende Klemmbacken (17, 18) zum Klemmen und Freigeben der Fleischgräten (11) zugeordnet sind, wobei die Klemmbacken (17, 18) aufeinander zu und voneinander weg bewegbar ausgebildet und eingerichtet sind, und dass der Antrieb (15) zum Ausüben einer oszillierenden Drehbewegung des Grundkörpers (16) um die Drehachse D und damit der Klemmbacken (17, 18) um die Mittelachse M ausgebildet und eingerichtet ist.

2. Vorrichtung (10) nach Anspruch 1, **dadurch gekennzeichnet, dass** die Drehachse D des Grundkörpers (16) und die resultierende Mittelachse M der Klemmbacken (17, 18) gleichgerichtet und fluchtend zueinander ausgerichtet sind.

3. Vorrichtung (10) nach Anspruch 1 oder 2, **dadurch gekennzeichnet, dass** der Antrieb (15) ein Elektromotor ist, mittels dem die oszillierende Drehbewegung um einen Winkel vorzugsweise größer +/-60° um eine Nulllage und besonders bevorzugt um einen Winkel +/-180° um die Nulllage ausführbar ist.

4. Vorrichtung (10) nach einem oder mehreren der Ansprüche 1 bis 3, **dadurch gekennzeichnet, dass** sie eine Steuereinheit (23) umfasst, mittels der die Frequenz und die Amplitude der oszillierenden Drehbewegung um die Nulllage steuerbar sind.

5. Vorrichtung (10) nach einem oder mehreren der Ansprüche 1 bis 4, **dadurch gekennzeichnet, dass** sie zum automatischen Entfernen der Fleischgräten (11) aus Fischfilets (12) ausgebildet und eingerichtet ist und ein Transportelement (24) zum Zuführen und Abführen der zu bearbeitenden Fischfilets (12), Mittel (25) zum Aufnehmen produktspezifischer Daten, eine Auswerteeinheit (26) zum Ermitteln der exakten Position der zu entfernenden Fleischgräten (11) in jedem Fischfilet (12) sowie eine Steuereinheit (27) zum Steuern des Werkzeugs (13) in Abhängigkeit der aufgenommenen und ermittelten Daten und Informationen umfasst.

6. Vorrichtung (10) nach Anspruch 5, **dadurch gekennzeichnet, dass** das Werkzeug (13) bzw. der Grundkörper (16) mit den daran angeordneten Klemmbacken (17, 18) zusätzlich zur oszillierende Drehbewegung in mindestens zwei Freiheitsgraden bewegbar ausgebildet ist, nämlich einerseits vertikal zu der durch das Transportelement (24) aufgespannten Transportebene E und andererseits quer zur Transportrichtung T des Transportelementes (24).

7. Vorrichtung (10) nach einem oder mehreren der Ansprüche 1 bis 6, **dadurch gekennzeichnet, dass** das Werkzeug (13) bzw. der Grundkörper (16) mit den daran angeordneten Klemmbacken (17, 18) frei im Raum bewegbar ausgebildet und eingerichtet ist.

8. Vorrichtung (10) nach einem oder mehreren der Ansprüche 1 bis 7, **dadurch gekennzeichnet, dass** das Werkzeug (13) an einem Roboterarm angeordnet ist, mittels dem das Werkzeug (13) bzw. der Grundkörper (16) mit den daran angeordneten Klemmbacken (17, 18) mindestens in drei linearen Richtungen x, y, z bewegbar und um mindestens zwei Schwenkachsen S₁ und S₂ schwenkbar ausgebildet ist.

9. Vorrichtung (10) nach einem oder mehreren der Ansprüche 5 bis 8, **dadurch gekennzeichnet, dass** das Mittel (25) zum Aufnehmen der produktspezifischen Daten, nämlich zum Erkennen der Lage der Fischfilets (12) auf dem Transportelement (24) und/oder zum Erkennen der Größe und/oder Beschaffenheit der Fischfilets (12) mindestens eine Kamera (30) und/oder mindestens ein Röntgengerät (31) umfasst.

10. Vorrichtung (10) nach einem oder mehreren der Ansprüche 5 bis 9, **dadurch gekennzeichnet, dass** der Antrieb (28) für das Transportelement (24), das Mittel (25) zum Aufnehmen der produktspezifischen Daten, die Auswerteeinheit (26) zum Ermitteln der exakten Position der zu entfernenden Fleischgräten (11) sowie das Werkzeug (13) zum Entfernen der Fleischgräten (11) mit seinen Antrieben (15) an eine gemeinsame Steuereinheit (27) angeschlossen sind.

11. Vorrichtung (10) nach einem oder mehreren der Ansprüche 1 bis 10, **dadurch gekennzeichnet, dass** sie integraler Bestandteil einer automatischen Fischverarbeitungslinie ist.

12. Verfahren zum Entfernen von Fleischgräten (11) aus einem vollständig vom Grätengerüst abgetrennten Fischfilet (12), umfassend die Schritte:
- Klemmen der Fleischgräten (11) mittels eines einen Klemmmechanismus (14) aufweisenden Werkzeugs (13),
- Lösen der Fleischgräten (11) mittels des Klemmmechanismus (14), indem mindestens Teile des Klemmmechanismus (14) unter der Einwirkung eines Antriebs (15) stehen, und
- vollständiges Entfernen der Fleischgräten(11) durch Ziehen der Fleischgräten (11) in ihre Wuchsrichtung mittels des Klemmmechanismus (14),
**dadurch gekennzeichnet, dass** der aus einem Grundkörper (16) und mindestens zwei dem Grundkörper (16) zugeordneten Klemmbacken (17, 18) gebildete Klemmmechanismus (14) zum Lösen der Fleischgräten (11) durch den Antrieb (15) um eine Drehachse D zum Ausüben einer oszillierenden Drehbewegung rotierend angetrieben wird.

13. Verfahren nach Anspruch 12, **dadurch gekennzeichnet, dass** der Klemmmechanismus (14) mit seinen mindestens zwei eine resultierende Mittelachse M definierenden Klemmbacken (17, 18) zum Klemmen der Fleischgräten (11) derart auf diese aufgesetzt wird, dass die Mittelachse M, die gleichgerichtet und fluchtend zur Drehachse D ausgerichtet ist, zumindest im Bereich der den Klemmbacken (17, 18) zugewandten Enden der Fleischgräten (11) im Wesentlichen fluchtend zu der Mittelachse A der zu entfernenden Fleischgräten (11) ausgerichtet wird.

14. Verfahren nach Anspruch 12 oder 13, **dadurch gekennzeichnet, dass** das Entfernen der Fleischgräten (11) automatisch erfolgt, derart, dass die Fischfilets (12) mittels eines Transportelementes (24) zu- und abgeführt werden, vor dem Entfernen der Fleischgräten (11) produktspezifische Daten mittels eines Mittels (25) aufgenommen werden, diese Daten zum Ermitteln der exakten Position der zu entfernenden Fleischgräten (11) mittels einer Auswerteeinheit (26) ausgewertet werden und das Werkzeug (13) in Abhängigkeit der aufgenommenen und ermittelten Daten und Informationen mittels einer Steuereinheit (27) gesteuert wird.

15. Verfahren nach Anspruch 14, **dadurch gekennzeichnet, dass** das Werkzeug (13) bzw. der Grundkörper (16) mit den daran angeordneten Klemmbacken (17, 18) zusätzlich zur oszillierenden Drehbewegung durch die Steuereinheit (27) auf der Basis der aufgenommenen und ermittelten Daten und Informationen in mindestens zwei Freiheitsgraden zum Klemmen der Fleischgräten (11), zum Ziehen der Fleischgräten (11) und zum Freigeben der Fleischgräten (11) automatisch bewegt wird.

16. Verfahren nach einem oder mehreren der Ansprüche 12 bis 15, **dadurch gekennzeichnet, dass** die oszillierende Drehbewegung des Klemmmechanismus (14) hinsichtlich der Frequenz und der Amplitude gesteuert wird.

## Claims

1. Apparatus (10), designed and configured for the removal of pin bones (11) from a fish fillet (12) that has been completely separated from the skeleton, comprising a tool (13) having a clamping mechanism (14) for clamping and releasing individual pin bones (11), a drive (15) for the rotary driving of at least parts of the clamping mechanism (14) and means for transmitting the rotational movement from the drive (15) to the clamping mechanism (14), **characterised in that** the clamping mechanism (14) comprises a base body (16) that can be driven such that it rotates about a rotational axis (D), with which at least two clamping jaws (17, 18) are associated, which clamping jaws define a resulting central axis M and are for clamping and releasing the pin bones (11), wherein the clamping jaws (17, 18) are designed and configured such that they can move towards and away from one another, and the drive (15) is designed and configured for exerting an oscillating rotational movement of the base body (16) about the rotational axis (D) and thereby of the clamping jaws (17, 18) about the central axis M.

2. Apparatus (10) according to claim 1, **characterised in that** the rotational axis D of the base body (16) and the resulting central axis M of the clamping jaws (17, 18) are oriented in the same direction and aligned with one another.

3. Apparatus (10) according to claim 1 or 2, **characterised in that** the drive (15) is an electric motor by means of which the oscillating rotational movement is executable about an angle preferably greater than +/-60° around a zero position and especially preferably about an angle +/-180° around the zero position.

4. Apparatus (10) according to one or more of claims 1 to 3, **characterised in that** it comprises a control unit (23) by means of which the frequency and the amplitude of the oscillating rotational movement are controllable around the zero position.

5. Apparatus (10) according to one or more of claims 1 to 4, **characterised in that** it is designed and configured for automatic removal of the pin bones (11) from fish fillets (12) and comprises a transport element (24) for feeding and discharging the fish fillets (12) to be processed, means (25) for recording product-specific data, an evaluation unit (26) for determining the exact position of the pin bones (11) to be removed in each fish fillet (12) as well as a control unit (27) for controlling the tool (13) dependent on the recorded and determined data and information.

6. Apparatus (10) according to claim 5, **characterised in that** the tool (13) or the base body (16), with the clamping jaws (17, 18) arranged thereon, is configured to be movable in at least two degrees of freedom in addition to the oscillating rotational movement, namely, on the one hand, vertically to the transport plane E spanned by the transport element (24) and, on the other hand, transversely to the transport direction T of the transport element (24).

7. Apparatus (10) according to one or more of claims 1 to 6, **characterised in that** the tool (13) or the base body (16), with the clamping jaws (17, 18) arranged thereon, is designed and configured to be freely movable in space.

8. Apparatus (10) according to one or more of claims 1 to 7, **characterised in that** the tool (13) is arranged on a robot arm by means of which the tool (13) or the base body (16), with the clamping jaws (17, 18) arranged thereon, is designed to be movable in three linear directions x, y, z and pivotable about at least two pivot axes S₁ and S₂.

9. Apparatus (10) according to one or more of claims 5 to 8, **characterised in that** the means (25) for recording the product-specific data, namely for identifying the position of the fish fillet (12) on the transport element (24) and/or for identifying the size and/or texture of the fish fillet (12) comprises at least one camera (30) and/or at least one x-ray apparatus (31).

10. Apparatus (10) according to one or more of claims 5 to 9, **characterised in that** the drive (28) for the transport element (24), the means (25) for recording the product-specific data, the evaluation unit (26) for determining the exact position of the pin bones (11) to be removed and the tool (13) for removing the pin bones (11) with its drives (15) are connected to a common control unit (27).

11. Apparatus (10) according to one or more of claims 1 to 10, **characterised in that** it is an integral part of an automatic fish processing line.

12. Method for the removal of pin bones (11) from a fish fillet (12) that has been completely separated from the skeleton, comprising the steps:
- Clamping the pin bones (11) by means of a tool (13) having a clamping mechanism (14),
- Detaching the pin bones (11) by means of the clamping mechanism (14) in that at least parts of the clamping mechanism (14) are under the action of a drive (15), and
- Completely removing the pin bones (11) by extracting said pin bones (11) in their direction of growth by means of the clamping mechanism (14),
**characterised in that** the clamping mechanism (14) for detaching the pin bones (11), which is formed from a base body (16) and at least two clamping jaws (17, 18) associated with said base body (16), is rotatingly driven by means of the drive (15) about a rotational axis D for exerting an oscillating rotational movement.

13. Method according to claim 12, **characterised in that** the clamping mechanism (14) with its at least two clamping jaws (17, 18) for clamping the pin bones (11), which define a resulting central axis M, is attached to said pin bones in such a manner that the central axis M, which is oriented in the same direction and aligned with the rotational axis D, is oriented substantially in alignment with the central axis A of the pin bones (11) to be removed, at least in the region of the ends of the pin bones (11) directed towards the clamping jaws (17, 18).

14. Method according to claim 12 or 13, **characterised in that** removing the pin bones (11) takes place automatically, in such a manner that the fish fillets (12) are fed in and discharged by means of a transport element (24), prior to removing the pin bones (11) product-specific data are recorded by means of a means (25), these data are evaluated by means of an evaluation unit (26) to determine the exact position of the pin bones (11) to be removed and the tool (13) is controlled by means of a control unit (27) dependent on the recorded and determined data and information.

15. Method according to claim 14, **characterised in that** the tool (13) or the base body (16), with the clamping jaws (17, 18) arranged thereon, in addition to the oscillating rotational movement is automatically moved by the control unit (27) in at least two degrees of freedom based on the recorded and determined data and information for clamping the pin bones (11), for extracting the pin bones (11) and for releasing the pin bones (11).

16. Method according to one or more of claims 12 to 15, **characterised in that** the oscillating rotational movement of the clamping mechanism (14) is controlled in respect of the frequency and amplitude.

## Revendications

1. Dispositif (10), conçu et configuré pour enlever des arêtes intramusculaires (11) d'un filet de poisson (12) entièrement détaché du squelette, comprenant un outil (13) muni d'un mécanisme de serrage (14) pour serrer et relâcher des arêtes intramusculaires (11) individuelles, un entraînement (15) pour entraîner en rotation au moins des pièces du mécanisme de serrage (14) ainsi que des moyens pour transmettre le mouvement de rotation de l'entraînement (15) au mécanisme de serrage (14), **caractérisé en ce que** le mécanisme de serrage (14) comprend un corps de base (16), susceptible d'être entraîné en rotation autour d'un axe de rotation D, auquel sont associées au moins deux mâchoires (17, 18) définissant un axe central M en résultant, pour serrer et relâcher les arêtes intramusculaires (11), les mâchoires (17, 18) étant conçues et configurées susceptibles d'être mises en mouvement l'une vers l'autre ou s'écartant l'une de l'autre, et que l'entraînement (15) est conçu et configuré pour exercer un mouvement de rotation oscillant du corps de base (16) autour de l'axe de rotation D et ainsi des mâchoires (17, 18) autour de l'axe central M.

2. Dispositif (10) selon la revendication 1, **caractérisé en ce que** l'axe de rotation D du corps de base (16) et l'axe central M, en résultant, des mâchoires (17, 18) sont dans un sens parallèle et orientés dans l'alignement l'un de l'autre.

3. Dispositif (10) selon la revendication 1 ou 2, **caractérisé en ce que** l'entraînement (15) est un moteur électrique au moyen duquel le mouvement de rotation oscillant est susceptible d'être exécuté dans un angle de préférence supérieur à +/- 60° autour d'une position zéro et notamment de préférence dans un angle de +/-180° autour de la position zéro.

4. Dispositif (10) selon l'une quelconque ou plusieurs des revendications 1 à 3, **caractérisé en ce qu'**il comprend une unité de commande (23) au moyen de laquelle la fréquence et l'amplitude du mouvement de rotation oscillant sont susceptibles d'être commandées autour de la position zéro.

5. Dispositif (10) selon l'une quelconque ou plusieurs des revendications 1 à 4, **caractérisé en ce qu'**il est conçu et configuré pour enlever de manière automatique les arêtes intramusculaires (11) de filets de poisson (12) et qu'il comprend un élément de transport (24) pour introduire et retirer les filets de poissons (12) à traiter, des moyens (25) pour recueillir des données spécifiques aux produits, une unité d'évaluation (26) pour déterminer la position exacte des arêtes intramusculaires (11) à enlever dans chaque filet de poisson (12) ainsi qu'une unité de commande (27) pour commander l'outil (13) en fonction des données et informations recueillies et déterminées.

6. Dispositif (10) selon la revendication 5, **caractérisé en ce que** l'outil (13), à défaut le corps de base (16) muni des mâchoires (17, 18) agencées sur celui-ci est réalisé susceptible d'être mis en mouvement, outre en mouvement de rotation oscillant, dans au moins deux degrés de liberté, à savoir d'une part à la verticale du plan de transport E traversant l'élément de transport (24) et d'autre part à la transversale du sens de transport T de l'élément de transport (24).

7. Dispositif (10) selon l'une quelconque ou plusieurs des revendications 1 à 6, **caractérisé en ce que** l'outil (13), à défaut le corps de base (16) muni des mâchoires (17, 18) agencées sur celui-ci est conçu et configuré susceptible d'être mis en mouvement librement dans l'espace.

8. Dispositif (10) selon l'une quelconque ou plusieurs des revendications 1 à 7, **caractérisé en ce que** l'outil (13) est agencé sur un bras de robot au moyen duquel l'outil (13), à défaut le corps de base (16) muni des mâchoires (17, 18) agencées sur celui-ci est réalisé susceptible d'être mis en mouvement au moins dans trois directions linéaires x, y, z et d'être pivoté autour d'au moins deux axes de pivotement S₁ et S₂.

9. Dispositif (10) selon l'une quelconque ou plusieurs des revendications 5 à 8, **caractérisé en ce que** le moyen (25) pour recueillir les données spécifiques aux produits, c'est-à-dire pour identifier la position des filets de poisson (12) sur l'élément de transport (24) et/ou à identifier la taille et/ou la nature des filets de poisson (12) comprend au moins une caméra (30) et/ou au moins un appareil à rayons X (31).

10. Dispositif (10) selon l'une quelconque ou plusieurs des revendications 5 à 9, **caractérisé en ce que** l'entraînement (28) pour l'élément de transport (24), le moyen (25) pour recueillir les données spécifiques aux produits, l'unité d'évaluation (26) pour déterminer la position exacte des arêtes intramusculaires (11) à enlever ainsi que l'outil (13) pour enlever les arêtes intramusculaires (11) muni de ses entraînements (15) sont raccordés à une unité de commande (27) commune.

11. Dispositif (10) selon l'une quelconque ou plusieurs des revendications 1 à 10, **caractérisé en ce qu'**il est le constituant intégral d'une ligne de traitement automatique de poissons.

12. Procédé pour enlever des arêtes intramusculaires (11) d'un filet de poisson (12) entièrement détaché du squelette, comprenant les étapes :
- serrer les arêtes intramusculaires (11) au moyen d'un outil (13) présentant un mécanisme de serrage (14),
- détacher les arêtes intramusculaires (11) au moyen du mécanisme de serrage (14), au moins des pièces du mécanisme de serrage (14) étant sous l'effet d'un entraînement (15), et
- retirer entièrement les arêtes intramusculaires (11) en tirant les arêtes intramusculaires (11) dans leur sens de croissance au moyen du mécanisme de serrage (14),
**caractérisé en ce que** le mécanisme de serrage (14) pour détacher les arêtes intramusculaires (11), constitué d'un corps de base (16) et d'au moins deux mâchoires (17, 18) associées au corps de base (16), est entraîné en rotation par l'entraînement (15) autour d'un axe de rotation D pour exercer un mouvement de rotation oscillant.

13. Procédé selon la revendication 12, **caractérisé en ce que** le mécanisme de serrage (14) pour serrer les arêtes intramusculaires (11), muni de ses au moins deux mâchoires (17, 18) définissant un axe central M en résultant est placé de telle manière sur celles-ci que l'axe central M, qui est orienté à la parallèle et dans l'alignement de l'axe de rotation D, est, au moins dans la zone des extrémités des arêtes intramusculaires (11) tournées vers les mâchoires (17, 18), orienté sensiblement dans l'alignement de l'axe central A des arêtes intramusculaires (11) à enlever.

14. Procédé selon la revendication 12 ou 13, **caractérisé en ce que** les arêtes intramusculaires (11) sont enlevées automatiquement, de telle sorte que les filets de poisson (12) sont introduits et retirés au moyen d'un élément de transport (24), des données spécifiques aux produits sont recueillies au moyen d'un moyen (25) avant d'enlever les arêtes intramusculaires (11), ces données sont évaluées à l'aide d'une unité d'évaluation (26) pour déterminer la position exacte des arêtes intramusculaires (11) à enlever et l'outil (13) est commandé au moyen d'une unité de commande (27) en fonction des données et informations recueillies et déterminées.

15. Procédé selon la revendication 14, **caractérisé en ce que** l'outil (13), à défaut le corps de base (16) muni des mâchoires (17, 18) agencées sur celui-ci est, outre le mouvement de rotation oscillant, mis automatiquement en mouvement par l'unité de commande (27) sur la base des données et informations recueillies et déterminées dans au moins deux degrés de liberté pour serrer les arêtes intramusculaires (11), pour tirer les arêtes intramusculaires (11) et pour relâcher les arêtes intramusculaires (11).

16. Procédé selon l'une quelconque ou plusieurs des revendications 12 à 15, **caractérisé en ce que** le mouvement de rotation oscillant du mécanisme de serrage (14) est commandé en fréquence et en amplitude.
